# EUROPÄISCHE PATENTSCHRIFT

(11) **EP 3 144 566 B1**
(45) Veröffentlichungstag und Bekanntmachung des Hinweises auf die Patenterteilung: **01.05.2019**
(21) Anmeldenummer: 16186630.6
(22) Anmeldetag: 31.08.2016
(51) Int. Cl.: F16J 15/02, F16J 15/16, F16J 15/3284, F16J 15/48

(54) **DICHTUNGSVORRICHTUNG UND ANTRIEBSMASCHINE MIT EINER DICHTUNGSVORRICHTUNG**
SEALING DEVICE AND DRIVE MACHINE WITH A SEALING DEVICE
DISPOSITIF D'ETANCHEITE ET MACHINE D'ENTRAINEMENT COMPRENANT UN DISPOSITIF D'ETANCHEITE

(30) Priorität: 17.09.2015 DE 102015217811
(43) Veröffentlichungstag der Anmeldung: 22.03.2017
(73) Patentinhaber: ROBERT BOSCH GMBH, 70442 Stuttgart (DE)
(72) Erfinder: Doehring, Jochen, 70439 Stuttgart-Stammheim (DE); Stoehrer, Felix, 75449 Wurmberg (DE)

(56) Entgegenhaltungen:
- EP-A1- 2 532 932
- DE-A1- 10 003 646
- US-A- 1 946 475
- US-A1- 2005 206 095

## Beschreibung

Die Erfindung betrifft eine Dichtungsvorrichtung und eine Antriebsmaschine mit einer Dichtungsvorrichtung.

### Stand der Technik

Dichtungsvorrichtungen zwischen einer umlaufenden Welle in einem Gehäuse von beispielsweise Antriebsmaschinen sind an die geometrische Form der Welle angepasst. Mit anderen Worten ist eine Form der Dichtungsvorrichtung durch eine Geometrie der Welle und des Gehäuses vorbestimmt. Das heißt, dass die Dichtungsvorrichtung einem Spalt zwischen der Welle und dem Gehäuse angepasst ist. Derzeitige Dichtungsvorrichtungen weisen ferner, um eine abdichtende Funktion zu gewährleisten, eine sehr geringe Flexibilität auf. Des Weiteren sind derzeitige Dichtungsvorrichtungen kaum geeignet, Toleranzen zwischen Gehäuse und Welle auszugleichen und gleichzeitig als Dichtung zu fungieren.

Die EP 0 012 133 B1 beschreibt eine Dichtung für einen Spalt zwischen einer umlaufenden Welle und einer Gehäusebohrung. Die US 1 946 475 A offenbart eine Dichtung, die aus einer Vielzahl von Schichten besteht. Die EP 2 532 932 A1 offenbart eine Radialwellendichtung.

### Offenbarung der Erfindung

Die Erfindung schafft eine Dichtungsvorrichtung nach Anspruch 1 und eine Antriebsmaschine mit einer Dichtungsvorrichtung nach Anspruch 13.

Bevorzugte Weiterbildungen sind Gegenstand der jeweiligen Unteransprüche.

### Vorteile der Erfindung

Die der vorliegenden Erfindung zugrundeliegende Idee liegt insbesondere darin, eine Dichtungsvorrichtung mit einem Dichtungselement bereitzustellen. Das Dichtungselement umfasst eine flexible Trägerstruktur, wobei die flexible Trägerstruktur zumindest bereichsweise mit einem Beschichtungsmaterial stoffschlüssig verbunden ist. Eine Texturierung der flexiblen Trägerstruktur bestimmt hierbei eine Verformbarkeit, Steifigkeit und Dämpfung der flexiblen Trägerstruktur, wobei über das Beschichtungsmaterial selbst eine Dichtheit sowie Verschleißbeständigkeit des Dichtungselements bestimmt ist.

Die Dichtungsvorrichtung umfasst ferner ein Strukturbauteil, wobei das Dichtungselement auf dem Strukturbauteil angeordnet ist und das Dichtungselement mit einem Druck beaufschlagbar ist und nach Entfernen des Drucks das Dichtungselement seine Form beibehält. Mit anderen Worten ist das hier beschriebene Dichtungselement formstabil und behält seine durch die flexible Trägerstruktur und dem Beschichtungsmaterial vorgegebene Initialform bzw. Ausgangsform, wobei bei Beaufschlagung mit Druck eine Abweichung von der Initialform aufgrund insbesondere eines Verhältnisses zwischen der Verformbarkeit, der Steifigkeit und der Dämpfung der flexiblen Trägerstruktur möglich ist.

Somit ist es mit der hier beschriebenen Dichtungsvorrichtung möglich, den Spalt zwischen einer Welle und einem Gehäuse abzudichten, wobei die hier beschriebene Dichtungsvorrichtung nicht von einer Form des Spaltes zwischen der Welle und des Gehäuses abhängt. Somit lässt sich insbesondere ein sehr enger Dichtspalt realisieren. Aufgrund der Flexibilität der hier beschriebenen Dichtungsvorrichtung können die während des Betriebs auftretenden Verschiebungen und Verformungen aufgenommen werden, was eine Zerstörung des Dichtelements durch hohen Kräfte oder Reibleistungen verhindert. Ferner weist die Dichtungsvorrichtung eine hohe Lebensdauer auf.

Gemäß einer bevorzugten Weiterbildung ist die Dichtungsvorrichtung zwischen der Welle und dem Gehäuse angeordnet, wobei das Dichtungselement mit der Welle und das Strukturbauteil mit dem Gehäuse zumindest bereichsweise in Kontakt stehen. Aufgrund der hier beschriebenen materialspezifischen Eigenschaften kann die Dichtungsvorrichtung besonders einfach zwischen einer Welle und einem Gehäuse angeordnet werden.

Gemäß einer weiteren bevorzugten Weiterbildung ist die Dichtungsvorrichtung zwischen der Welle und dem Gehäuse angeordnet, wobei das Strukturbauteil an der Welle und das Dichtungselement mit dem Gehäuse zumindest bereichsweise in Kontakt steht. Aufgrund der hier beschriebenen materialspezifischen Eigenschaften kann die Dichtungsvorrichtung besonders vielseitig, beispielsweise in Antriebsmaschinen oder Turbomaschinen, eingesetzt werden.

Gemäß einer weiteren bevorzugten Weiterbildung nimmt durch Beaufschlagen des Dichtungselements mit dem Druck eine Kontaktfläche zwischen dem Dichtungselement und der Welle zu. Alternativ kann sich die Kontaktfläche auch zwischen dem Dichtungselement und dem Gehäuse befinden. Hierbei wird der Druck mittels des Strukturbauteils auf das Dichtungselement übertragen. So lässt sich auf einfache Art und Weise die Kontaktfläche zwischen dem Dichtungselement und der Welle erhöhen, wobei insbesondere eine abdichtende Funktion der Dichtungsvorrichtung erhöht werden kann. Des Weiteren kann so in bestimmtem Maße ein Druckausgleich zwischen einem abzudichtenden Druck im Dichtspalt und dem Druck mit dem das Dichtungselement von innen beaufschlagt wird erreicht werden. Dies reduziert eine Anpresskraft auf ein Minimum, sodass die Dichtheit bei geringerer Reibleistung gewährleistet werden kann.

Unter "Kontaktfläche" versteht man im vorliegenden Zusammen einen Bereich, der zwischen dem Dichtungselement und der Welle oder dem Dichtungselement und dem Gehäuse im Initialzustand, beim Anfahren bzw. geringer Drehzahl einen Kontakt zwischen dem Dichtungselement und der Welle oder dem Dichtungselement und dem Gehäuse ausbildet, wobei sich im Betrieb zwischen der Kontaktfläche des Dichtungselements und der Welle oder dem Gehäuse insbesondere ein dünner Luft- oder Ölfilm ausbilden kann, auf dem das Dichtungselement gleitet. Der Luft- oder Ölfilm kann eine Dicke von 0,1 bis 5 Mikrometer aufweisen.

Gemäß einer weiteren bevorzugten Weiterbildung fungiert das Dichtungselement nach Art eines Feder-Dämpfer-Systems. Auf Basis dieses Systems lassen sich besonders einfach die Verformbarkeit, die Steifigkeit und die Dämpfung des Dichtungselements realisieren, wobei die Dichtheit sowie die Verschleißbeständigkeit des Dichtungselements durch das Beschichtungsmaterial bestimmbar sind.

Gemäß einer weiteren bevorzugten Weiterbildung sind die Verformbarkeit, die Steifigkeit und die Dämpfung des Dichtungselements durch eine Dicke und/oder Ausrichtung von Fasern der flexiblen Trägerstruktur einstellbar. So lässt sich auf einfache Art und Weise durch eine selektive Auswahl der Dicke und/oder Ausrichtung von den Fasern der flexiblen Trägerstruktur ein Verhältnis zwischen der Verformbarkeit, der Steifigkeit und der Dämpfung des Dichtungselements einstellen.

Gemäß einer weiteren bevorzugten Weiterbildung sind die Dichtheit sowie die Verschleißbeständigkeit des Dichtungselements durch eine Granularität des Beschichtungsmaterials einstellbar. So lässt sich durch geeignete Wahl des Beschichtungsmaterials insbesondere eine Lebensdauer der Dichtungsvorrichtung verlängern.

Gemäß einer weiteren bevorzugten Weiterbildung umfasst die flexible Trägerstruktur eine Anzahl von Drähten, ein Gewebe und/oder ein Metallgewebe oder einen Vliesstoff oder einen Schaum. So kommen zur Realisierung der Dichtungsvorrichtung eine Vielzahl von unterschiedlichen Materialien und Gewebestrukturen für die flexible Trägerstruktur in Frage. So lässt sich die hier beschriebene Dichtungsvorrichtung in eine Vielzahl von Antriebsvorrichtungen einsetzen.

Gemäß einer weiteren bevorzugten Weiterbildung umfasst das Strukturbauteil ein Druckventil. Somit lässt sich besonders effizient das Dichtungselement mit dem Druck beaufschlagen.

Gemäß einer weiteren bevorzugten Weiterbildung umfasst das Strukturbauteil zumindest einen Kühlkanal. Der zumindest eine Kühlkanal kann insbesondere mit dem Dichtungselement in Kontakt stehen. So lässt sich das Dichtungselement während des Betriebs der Dichtungsvorrichtung auf einfache Art und Weise kühlen.

Gemäß einer weiteren bevorzugten Weiterbildung erfolgt das stoffschlüssige Verbinden des Beschichtungsmaterials mit der flexiblen Trägerstruktur mittels einer Dünnschichttechnologie. Insbesondere kommen hierbei Additive Manufacturing bzw. Sputter-Technologien in Frage. Somit lässt sich auf einfache Art und Weise eine stoffschlüssige Verbindung zwischen der flexiblen Trägerstruktur und dem Beschichtungsmaterial realisieren.

Die hier beschriebenen Merkmale für die Dichtungsvorrichtung gelten auch für die Dichtungsvorrichtung der Antriebsmaschine.

### Kurze Beschreibung der Zeichnungen

Weitere Merkmale und Vorteile der vorliegenden Erfindung werden nachfolgend anhand von Ausführungsformen in Bezug auf die Figuren erläutert.

Es zeigen:
- Fig. 1a bis 1c: schematische Ansichten zur Erläuterung eines Dichtungselements gemäß einer Ausführungsform der Erfindung;
- Fig. 2a und 2b: schematische Querschnittsansichten zur Erläuterung einer Dichtungsvorrichtung gemäß einer ersten Ausführungsform der vorliegenden Erfindung;
- Fig. 3a bis 3f: schematische Querschnittsansichten zur Erläuterung einer Dichtungsvorrichtung gemäß weiterer Ausführungsformen der vorliegenden Erfindung;
- Fig. 4a und 4b: schematische Ansichten eines Dichtungselements am Beispiel einer Bürstendichtung;
- Fig. 5a und 5b: schematische Ansichten zur Erläuterung einer weiteren Anwendung eines Dichtungselements am Beispiel eines Folienlagers.

### Ausführungsformen der Erfindung

In den Figuren bezeichnen gleiche Bezugszeichen gleiche bzw. funktionsgleiche Elemente.

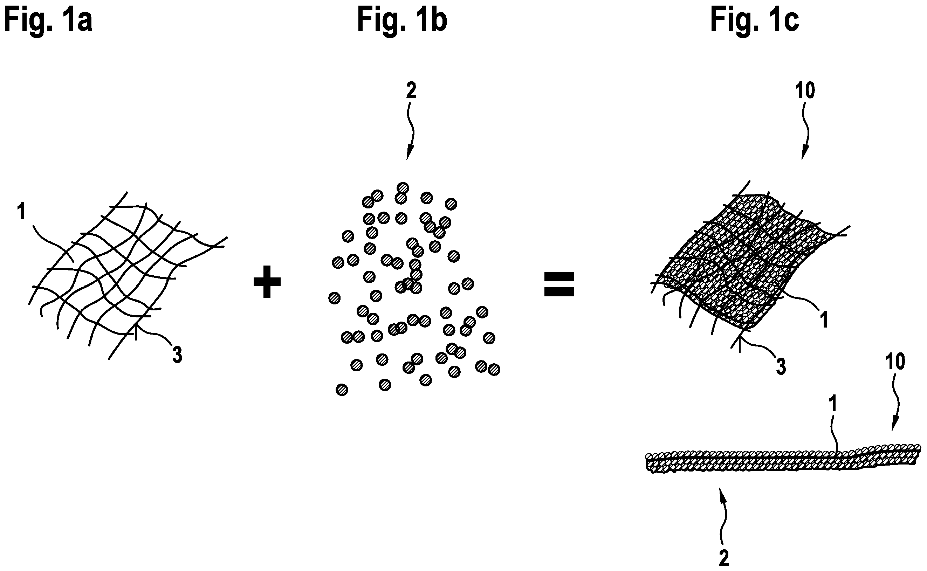

Fig. 1a bis 1c sind schematische Ansichten zur Erläuterung eines Dichtungselements gemäß einer Ausführungsform der Erfindung.

In Fig. 1a bezeichnet Bezugszeichen 1 eine flexible Trägerstruktur 1 mit einzelnen Fasern 3. In der Fig. 1a liegt die flexible Trägerstruktur 1 in Form eines Gewebes und/oder eines Metallgewebes vor.

In Fig. 1b bezeichnet Bezugszeichen 2 ein Beschichtungsmaterial. Das Beschichtungsmaterial 2 liegt in Form eines Granulats vor. Eine Dichtheit ϑ sowie die Verschleißbeständigkeit µ werden sich durch die materialspezifischen Eigenschaften des Granulats bzw. einer Granularität des Beschichtungsmaterials 2 bestimmt. Eine Verformbarkeit α, eine Steifigkeit β und eine Dämpfung ε des Dichtungselements werden durch eine Dicke und/oder Ausrichtung von den Fasern 3 der flexiblen Trägerstruktur 1 bestimmt.

In Fig. 1c bezeichnet Bezugszeichen 10 ein Dichtungselement mit der flexiblen Trägerstruktur 1, wobei die flexible Trägerstruktur 1 zumindest bereichsweise mit dem Beschichtungsmaterial 2 stoffschlüssig verbunden ist. Das stoffschlüssige Verbinden kann mittels Dünnschichttechnologie erfolgen. Eine Texturierung der flexiblen Trägerstruktur bestimmt hierbei die Verformbarkeit α, die Steifigkeit β und die Dämpfung ε. Materialspezifische Eigenschaften des Beschichtungsmaterial 2 bestimmen die Dichtheit ϑ sowie die Verschleißbeständigkeit µ des Dichtungselements 10.

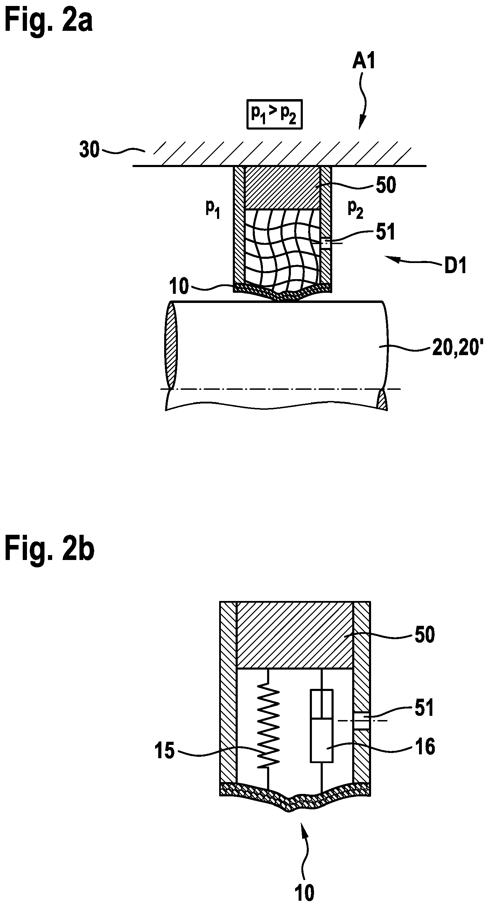

Fig. 2a und 2b sind schematische Querschnittsansichten zur Erläuterung einer Dichtungsvorrichtung gemäß einer ersten Ausführungsform der vorliegenden Erfindung.

In Fig. 2a bezeichnet Bezugszeichen D1 eine Dichtungsvorrichtung mit einem Dichtungselement 10 wie beispielsweise in der Fig. 1c gezeigt. Das Dichtungselement 10 ist auf einem Strukturbauteil 50 angeordnet, wobei das Dichtungselement 10 mittels eines Druckventils 51 mit einem Druck p beaufschlagt ist.

Die in der Fig. 2a gezeigte Dichtungsvorrichtung D1 ist zwischen einer Welle 20 und einem Gehäuse 30 angeordnet, wobei das Strukturbauteil 50 mit dem Gehäuse 30 und das Dichtungselement 10 mit der Welle 20 kontaktiert ist. Alternativ kann es sich bei der Welle 20 um eine Antriebswelle 20' einer Antriebsmaschine A1 handeln.

Um durch Beaufschlagen des Dichtungselements 10 mit dem Druck p eine Kontaktfläche 11 zwischen dem Dichtungselement 10 und der Welle 20 zu erhöhen ist ein Druck p1 größer als ein Druck p2.

In Fig. 2b ist die in Fig. 2a gezeigte Dichtungsvorrichtung D1 dargestellt mit dem Unterschied, dass eine Funktionsweise der Dichtungsvorrichtung D1 mittels einer Feder 15 und einer Dämpfung 16 dargestellt ist. Da das Dichtungselement 10 nach Art eines Feder-Dämpfer-Systems fungiert, wird eine maximale Abdichtung erreicht, wobei aufgrund der materialspezifischen Eigenschaften der flexiblen Trägerstruktur 1 des Dichtungselements 10 beispielsweise Unebenheiten oder Bewegungen der Welle 20 aufgefangen bzw. kompensiert werden können.

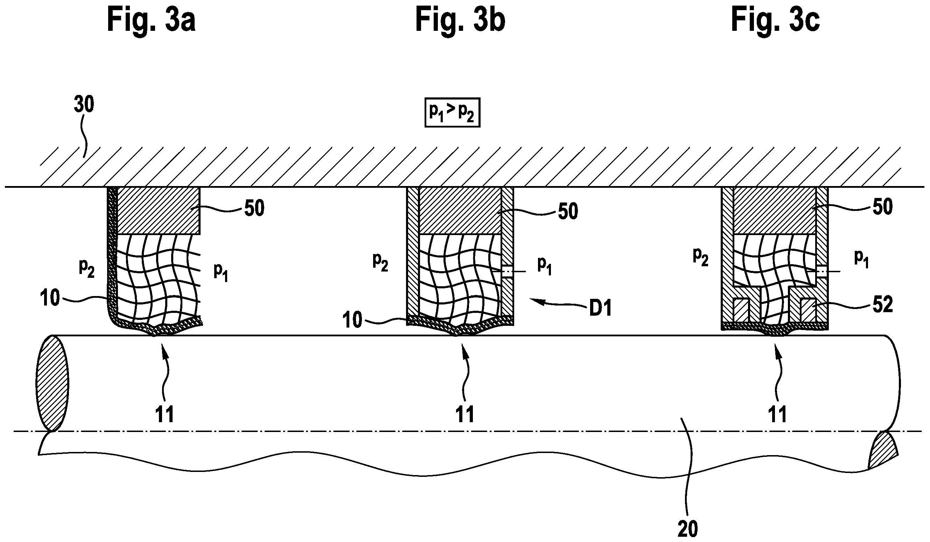

Fig. 3a bis 3f sind schematische Querschnittsansichten zur Erläuterung einer Dichtungsvorrichtung gemäß weiterer Ausführungsformen der vorliegenden Erfindung.

In den Fig. 3a bis 3f sind alternative Ausführungsformen der Dichtungsvorrichtung D1 gezeigt. Für alle in den Fig. 3a bis 3f gezeigten alternativen Ausführungsbeispielen gilt, dass der Druck p1 größer dem Druck p2 ist, um eine konstante Beaufschlagung mit dem Druck p auf das Dichtungselement 10 zu gewährleisten.

In Fig. 3a ist eine L-förmige Dichtungsvorrichtung D1 gezeigt, wobei die Dichtungsvorrichtung D1 von einer Innenseite des Strukturbauteils 50 mit dem Druck p1 beaufschlagt ist. In der Fig. 3A wird somit der Spalt zwischen der Welle 20 und dem Gehäuse 30 durch das Dichtungselement 10 abgedichtet, wobei das Strukturbauteil 50 zum Befestigen des Dichtungselements 10 an dem Gehäuse 30 angeordnet ist. Das in der Fig. 3a gezeigte Ausführungsbeispiel der Dichtungsvorrichtung D1 eignet sich besonders zum Einsatz bei geringen Druckdifferenzen.

In Fig. 3b ist die Dichtungsvorrichtung D1 aus der Fig. 2a gezeigt. Die Dichtungsvorrichtung D1 der Fig. 3b bzw. Fig. 2a eignet sich besonders bei sehr hohen Druckdifferenzen, wobei durch das Druckventil 51 das Dichtungselement 10 mit dem Druck p1 beaufschlagt wird, wobei eine Kontaktfläche 11 zwischen dem Dichtungselement 10 und der Welle 20 zunimmt. Mit anderen Worten wird das Dichtungselement 10 der Dichtungsvorrichtung D1 an die Welle 20 gepresst.

In Fig. 3c ist eine Dichtungsvorrichtung D1 wie in der Fig. 3b gezeigt mit dem Unterschied, dass das Strukturbauteil 50 zwei Kühlkanäle 52 umfasst. Die Kühlkanäle 52 stehen mit dem Dichtungselement 10 in Kontakt. Hierdurch lässt sich das Dichtungselement 10 während des Betriebs der Dichtungsvorrichtung D1 effizient abkühlen.

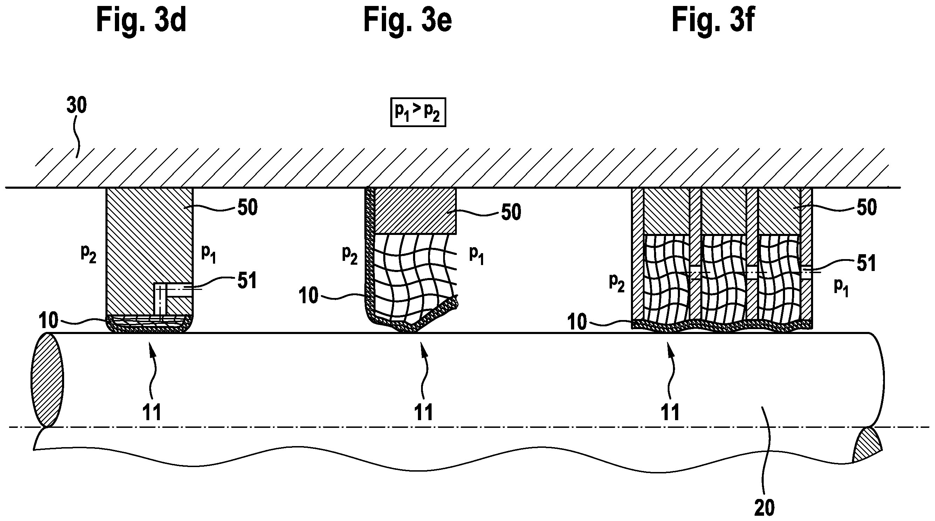

Die in Fig. 3d gezeigte Dichtungsvorrichtung basiert auf dem Prinzip der in Fig. 3b gezeigten Dichtungsvorrichtung mit dem Unterschied, dass das Strukturbauteil 50 derart ausgebildet ist, dass ein hoher Druck auf eine reduzierte Fläche des Dichtungselement 10 ausgeübt wird. Dies kann insbesondere wie in Fig. 3d gezeigt dadurch erzielt werden, dass eine Druckkammer des Strukturbauteils 50 entsprechend klein ausgebildet wird. Somit verringert sich eine Fläche, die mit dem Druck p bzw. p1 beaufschlagbar ist. Mit anderen Worten kann durch das wie in Fig. 3d gezeigte Prinzip die Kontaktfläche 11 zwischen Dichtungselement 10 und der Welle 20 vergrößert werden.

Die in Fig. 3e gezeigte alternative Ausführungsform der Dichtungsvorrichtung D1 basiert auf der in Fig. 3a gezeigten Dichtungsvorrichtung D1 mit dem Unterschied, dass das Beschichtungsmaterial 2 derart auf die flexible Trägerstruktur 1 mittels beispielsweise Dünnschichttechnologie stoffschlüssig aufgebracht worden ist, dass durch die Form des Dichtungselements 10 eine Druckverteilung mittels des Dichtungselements 10 auf die Welle 20 vorbestimmt bzw. voreingestellt ist. Somit lässt sich ein lokal begrenzter Bereich der Welle 20 durch die Dichtungsvorrichtung D1 abdichten.

In Fig. 3f ist die Dichtungsvorrichtung D1 der Fig. 3b gezeigt mit dem Unterschied, dass die in Fig. 3b gezeigte Dichtungsvorrichtung D1 zueinander in Serie geschaltet sind und wie in Fig. 3f gezeigt, die einzelnen Dichtungsvorrichtungen D1 mittels der Druckventile 51 gleichzeitig mit dem Druck p1 beaufschlagt werden können.

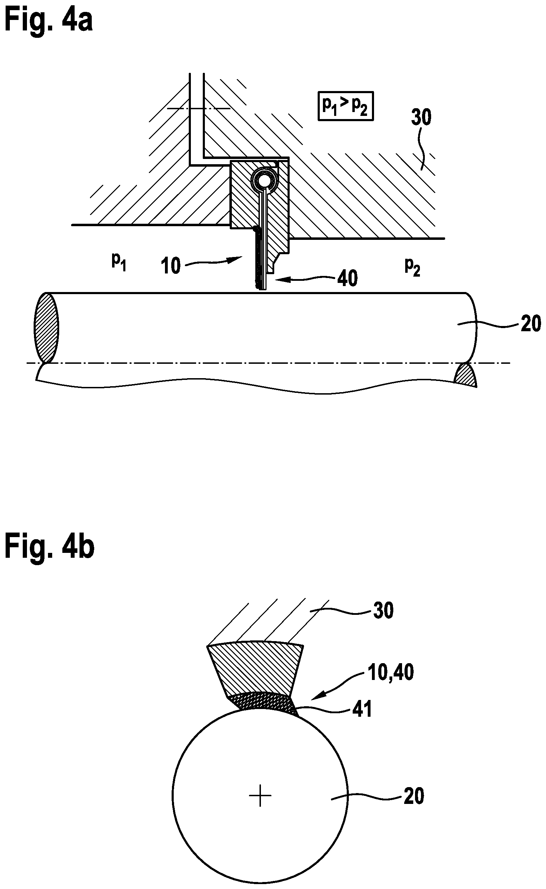

Fig. 4a und 4b sind schematische Ansichten eines Dichtungselements am Beispiel einer Bürstendichtung.

In Fig. 4a bezeichnet Bezugszeichen 40 eine Bürste, auf welcher das Dichtungselement 10 stoffschlüssig aufgebracht ist. Mit anderen Worten ist die die flexible Trägerstruktur 1 der Fig. 4a und 4b in Form einer Bürste 40 ausgebildet, wobei das Beschichtungsmaterial 2 stoffschlüssig mit einzelnen Drähten der Bürste 40 stoffschlüssig verbunden sind.

Fig. 4b zeigt eine Aufsicht auf die Bürste 40 mit dem Beschichtungsmaterial 2. Durch die Beschichtung der Bürste 40 kann somit eine höhere Abdichtung aufgrund des Beschichtungsmaterials 2 erzielt werden. Aufgrund einer geringen Granularität des Beschichtungsmaterials 2 kann hierbei eine Flexibilität der Bürste 40 beibehalten werden.

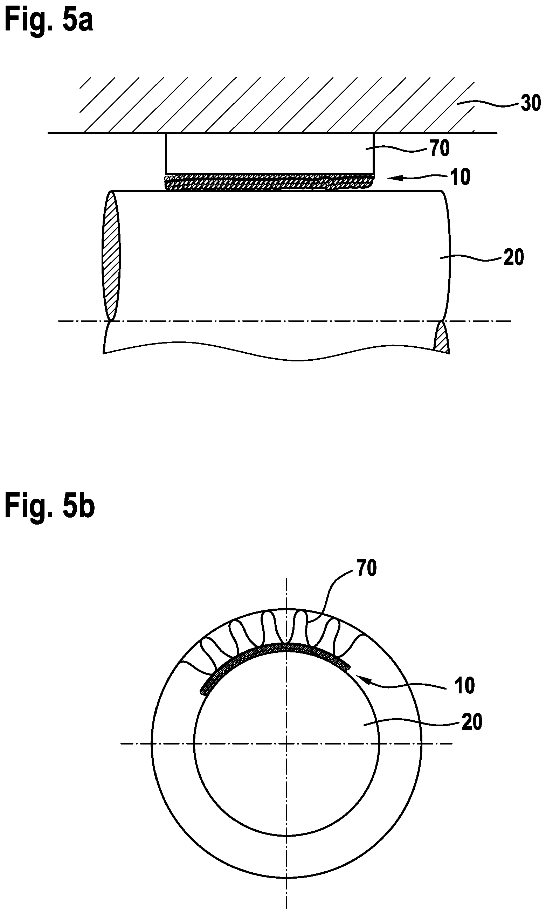

Fig. 5a und 5b sind schematische Ansichten zur Erläuterung einer weiteren Anwendung eines Dichtungselements am Beispiel eines Folienlagers.

In Fig. 5a ist ein weiteres Anwendungsbeispiel des Dichtungselements 10 in Bezug auf ein Folienlager gezeigt. Insbesondere eignet sich das Dichtungselement 10 zum Anordnen zwischen dem Folienlager und der Welle, da sich im Betrieb sich zwischen Welle 20 und dem Folienlager 70 ein Luftspalt ausbildet. Somit kann insbesondere eine Lebensdauer des Folienlagers durch Anordnen des Dichtungselements 10 erhöht werden. Insbesondere ist es denkbar bei sehr kleinen Wellendurchmessern das Folienlager 70 durch das hier beschriebene Dichtungselement 10 zu ersetzen.

Fig. 5b zeigt eine Aufsicht des in der Fig. 5a gezeigten Folienlagers 70 mit dem zwischen dem Folienlager 70 und der Welle 20 angeordneten Dichtungselement 10.

Obwohl die vorliegende Erfindung anhand bevorzugter Ausführungsbeispiele beschrieben wurde, ist sie darauf nicht beschränkt.

Obwohl die Dichtungsvorrichtung zum Anordnen zwischen einem Gehäuse und einer Welle beschrieben wurde, ist der Einsatz der Dichtungsvorrichtung nicht auf die hier beschriebenen Ausführungsbeispiele beschränkt. Insbesondere kann die Dichtungsvorrichtung in Turbomaschinen, Turboladern, Strömungsmaschinen, Turbinen und Wärmepumpen Einsatz finden.

## Patentansprüche

1. Dichtungsvorrichtung (D1) mit:
einem Dichtungselement (10) mit einer flexiblen Trägerstruktur (1), wobei die flexible Trägerstruktur (1) zumindest bereichsweise mit einem Beschichtungsmaterial (2) stoffschlüssig verbunden ist, wobei durch eine Texturierung der flexiblen Trägerstruktur (1) eine Verformbarkeit (a), Steifigkeit (β) und Dämpfung (ε) des Dichtungselements (10) bestimmt ist; und über das Beschichtungsmaterial (2) eine Dichtheit (ϑ) sowie Verschleißbeständigkeit (µ) des Dichtungselements (10) bestimmt ist; und
einem Strukturbauteil (50), wobei das Dichtungselement (10) auf dem Strukturbauteil (50) angeordnet ist und das Dichtungselement (10) mit einem Druck (p) beaufschlagbar ist, wodurch seine Form veränderbar ist, und nach Entfernen des Drucks (p) das Dichtungselement (10) seine Form beibehält,
**dadurch gekennzeichnet, dass** das Strukturbauteil (50) zumindest einen Kühlkanal (52) umfasst.

2. Dichtungsvorrichtung (D1) nach Anspruch 1, wobei der zumindest eine Kühlkanal (52) mit dem Dichtungselement (10) in Kontakt steht.

3. Dichtungsvorrichtung (D1) nach Anspruch 1 oder 2, wobei die Dichtungsvorrichtung (D1) zwischen einer Welle (20) und einem Gehäuse (30) angeordnet ist, wobei das Dichtungselement (10) mit der Welle (20) und das Strukturbauteil (50) mit dem Gehäuse (30) zumindest bereichsweise in Kontakt stehen.

4. Dichtungsvorrichtung (D1) nach einem der vorherigen Ansprüche, wobei durch Beaufschlagen des Dichtungselementes (10) mit dem Druck (p) eine Kontaktfläche (11) zwischen dem Dichtungselement (10) und der Welle (20) zunimmt.

5. Dichtungsvorrichtung (D1) nach einem der vorherigen Ansprüche, wobei das Dichtungselement (10) nach Art eines Feder (15)-Dämpfer(16)-Systems fungiert.

6. Dichtungsvorrichtung (D1) nach einem der vorherigen Ansprüche, wobei die Verformbarkeit (a), die Steifigkeit (β) und die Dämpfung (ε) des Dichtungselements (10) durch eine Dicke und/oder Ausrichtung von Fasern (3) der flexiblen Trägerstruktur (1) einstellbar ist.

7. Dichtungsvorrichtung (D1) nach einem der vorherigen Ansprüche, wobei die Dichtheit (ϑ) sowie die Verschleißbeständigkeit (µ) des Dichtungselements (10) durch eine Granularität des Beschichtungsmaterials (2) einstellbar ist.

8. Dichtungsvorrichtung (D1) nach einem der vorherigen Ansprüche, wobei die flexible Trägerstruktur (1) eine Vielzahl von Drähten umfasst.

9. Dichtungsvorrichtung (D1) nach einem der vorherigen Ansprüche, wobei die flexible Trägerstruktur (1) ein Gewebe und/oder ein Metallgewebe umfasst.

10. Dichtungsvorrichtung (D1) nach einem der vorherigen Ansprüche, wobei die flexible Trägerstruktur (1) einen Vliesstoff oder einen Schaum umfasst.

11. Dichtungsvorrichtung (D1) nach einem der vorherigen Ansprüche, wobei das Strukturbauteil (50) ein Druckventil (51) umfasst.

12. Dichtungsvorrichtung (D1) nach einem der vorhergehenden Ansprüche, wobei das stoffschlüssige Verbinden mittels Dünnschichttechnologie erfolgt.

13. Antriebsmaschine (A1) mit einer Dichtungsvorrichtung (D1) nach einem der Ansprüche 1 bis 12, wobei das Dichtungselement (10) zumindest bereichsweise mit einer Antriebswelle (20') in Kontakt steht.

## Claims

1. Sealing device (D1) having:
a sealing element (10) having a flexible support structure (1), wherein the flexible support structure (1) is at least in regions connected in a materially integral manner to a coating material (2), wherein a deformation capability (α), rigidity (β) and damping (ε) of the sealing element (10) are determined by a texturing of the flexible support structure (1); and a tightness (ϑ) as well as wear resistance (µ) of the sealing element (10) are determined by the coating material (2); and
a structural component (50), wherein the sealing element (10) is disposed on the structural component (50), and the sealing element (10) is capable of being impinged with a pressure (p) on account of which the shape of said element (10) is capable of being modified, and the sealing element (10) maintains the shape thereof after the removal of the pressure (p);
**characterized in that** the structural component (50) comprises at least one cooling duct (52).

2. Sealing device (D1) according to Claim 1, wherein the at least one cooling duct (52) contacts the sealing element (10).

3. Sealing device (D1) according to Claim 1 or 2, wherein the sealing device (D1) is disposed between a shaft (20) and a housing (30), wherein the sealing element (10) at least in regions contacts the shaft (20), and the structural component (50) at least in regions contacts the housing (30).

4. Sealing device (D1) according to one of the preceding claims, wherein a contact face (11) between the sealing element (10) and the shaft (20) is increased by impinging the sealing element (10) with the pressure (p).

5. Sealing device (D1) according to one of the preceding claims, wherein the sealing element (10) functions in the manner of a spring (15)/damper (16) system.

6. Sealing device (D1) according to one of the preceding claims, wherein the deformation capability (α), the rigidity (β) and the damping (ε) of the sealing element (10) are adjustable by a thickness and/or alignment of fibres (3) of the flexible support structure (1).

7. Sealing device (D1) according to one of the preceding claims, wherein the tightness (ϑ) as well as the wear resistance (µ) of the sealing element (10) are adjustable by a granularity of the coating material (2).

8. Sealing device (D1) according to one of the preceding claims, wherein the flexible support structure (1) comprises a multiplicity of wires.

9. Sealing device (D1) according to one of the preceding claims, wherein the flexible support structure (1) comprises a woven fabric and/or a woven metal fabric.

10. Sealing device (D1) according to one of the preceding claims, wherein the flexible support structure (1) comprises a non-woven fabric or a foam.

11. Sealing device (D1) according to one of the preceding claims, wherein the structural component (50) comprises a pressure valve (51).

12. Sealing device (D1) according to one of the preceding claims, wherein the materially-integral connection is performed by means of thin-film technology.

13. Drive machine (A1) having a sealing device (D1) according to one of Claims 1 to 12, wherein the sealing element (10) at least in regions contacts a drive shaft (20').

## Revendications

1. Dispositif d'étanchéité (D1) comprenant :
un élément d'étanchéité (10) présentant une structure de support souple (1), la structure de support souple (1) étant, au moins dans certaines régions, reliée par liaison de matière à une matière de revêtement (2), une déformabilité (α), une rigidité (β) et un amortissement (ε) de l'élément d'étanchéité (10) étant déterminés par une texturation de la structure de support souple (1) ; et une étanchéité (ϑ) ainsi qu'une résistance à l'usure (µ) de l'élément d'étanchéité (10) étant déterminées par le biais de la matière de revêtement (2) ; et
un composant structural (50), l'élément d'étanchéité (10) étant disposé sur le composant structural (50) et l'élément d'étanchéité (10) pouvant être exposé à une pression (p), de sorte que sa forme puisse être modifiée, et l'élément d'étanchéité (10) maintenant sa forme une fois la pression (p) supprimée,
**caractérisé en ce que** le composant structural (50) comporte au moins un canal de refroidissement (52).

2. Dispositif d'étanchéité (D1) selon la revendication 1, dans lequel ledit au moins un canal de refroidissement (52) est en contact avec l'élément d'étanchéité (10).

3. Dispositif d'étanchéité (D1) selon la revendication 1 ou 2, dans lequel le dispositif d'étanchéité (D1) est disposé entre un arbre (20) et un boîtier (30), dans lequel l'élément d'étanchéité (10) est en contact avec l'arbre (20) au moins dans certaines régions et le composant structural (50) est en contact avec le boîtier (30) au moins dans certaines régions.

4. Dispositif d'étanchéité (D1) selon l'une des revendications précédentes, dans lequel, par exposition de l'élément d'étanchéité (10) à la pression (p), une surface de contact (11) entre l'élément d'étanchéité (10) et l'arbre (20) augmente.

5. Dispositif d'étanchéité (D1) selon l'une des revendications précédentes, dans lequel l'élément d'étanchéité (10) fonctionne à la manière d'un système ressort (15)-amortisseur (16).

6. Dispositif d'étanchéité (D1) selon l'une des revendications précédentes, dans lequel la déformabilité (a), la rigidité (β) et l'amortissement (ε) de l'élément d'étanchéité (10) peuvent être réglés par une épaisseur et/ou une orientation de fibres (3) de la structure de support souple (1).

7. Dispositif d'étanchéité (D1) selon l'une des revendications précédentes, dans lequel l'étanchéité (ϑ) ainsi que la résistance à l'usure (µ) de l'élément d'étanchéité (10) peuvent être réglées par une granularité de la matière de revêtement (2).

8. Dispositif d'étanchéité (D1) selon l'une des revendications précédentes, dans lequel la structure de support souple (1) comprend une pluralité de fils.

9. Dispositif d'étanchéité (D1) selon l'une des revendications précédentes, dans lequel la structure de support souple (1) comporte un tissu et/ou un tissu métallique.

10. Dispositif d'étanchéité (D1) selon l'une des revendications précédentes, dans lequel la structure de support souple (1) comporte un non-tissé ou une mousse.

11. Dispositif d'étanchéité (D1) selon l'une des revendications précédentes, dans lequel le composant structural (50) comporte une soupape de pression (51).

12. Dispositif d'étanchéité (D1) selon l'une des revendications précédentes, dans lequel la liaison de matière s'effectue par une technologie des couches minces.

13. Machine d'entraînement (A1) comprenant un dispositif d'étanchéité (D1) selon l'une des revendications 1 à 12, dans lequel l'élément d'étanchéité (10) est, au moins dans certaines régions, en contact avec un arbre d'entraînement (20').
